# EUROPEAN PATENT APPLICATION

(11) **EP 2 096 626 A1**
(43) Date of publication of application: **02.09.2009**
(21) Application number: 08003831.8
(22) Date of filing: 29.02.2008
(51) Int. Cl.: G10H 1/00

(54) **Method for visualizing audio data**

(71) Applicant: Sony Corporation, Tokyo 108-0075 (JP)
(72) Inventor: Verbeeck, Mathieu, 1500 Halle (BE); Solum, Henning, 5640 Bad Gastein (AT)
(74) Representative: Müller - Hoffmann & Partner

(57) **Abstract**

A Method for visualizing audio data corresponding to a piece of music, comprising the steps of: determining a structure of said piece of music based on said audio data, said structure comprising music structure segments each having a music structure segment length; allocating a predetermined graphical object to said piece of music, said graphical object having a predetermined size; segmenting said graphical object into graphical segments, wherein each graphical segment has a size representing said music structure segment length; and displaying said graphical object and said graphical segments on a display.

## Description

The invention relates to a method for visualizing audio data corresponding to a piece of music and to a device for visualizing audio data corresponding to a piece of music. The invention further relates to a graphical user interface.

### BACKGROUND

Today, large data bases of music are widely available. Users, however, often have difficulties browsing such large data bases and finding a piece of music, e.g. a song, they like to listen to. Further, users often may not want to listen to a complete piece of music but only to a part of a song.

### SUMMARY OF THE INVENTION

It is an object of the invention to provide a method for visualizing audio data enabling a user to perform the above tasks efficiently. Further, it is an object of the invention to provide a respective device and graphical user interface for visualizing audio data.

The object is solved by a method and device and graphical user interface according to claims 1, 13, and 17, respectively.

Further objects and advantages of the invention will become apparent from a consideration of the drawings and ensuing description.

### BRIEF DESCRIPTION OF THE DRAWINGS

Fig. 1 shows a flowchart illustrating steps of the method for visualizing audio data;
Fig. 2 shows further steps of the method for visualizing audio data;
Fig. 3 shows an example where a piece of music is segmented into music structure segments;
Fig. 4 shows the graphical object and graphical segments corresponding to the example of Fig. 3;
Fig. 5 shows graphical objects/ segments of different pieces of music;
Fig. 6 shows a device for visualizing music;
Fig. 7 shows a possible embodiment for a graphical object and corresponding graphical segments;
Fig. 8 shows a system with a mobile device and server.

### DETAILED DESCRIPTION

The embodiments described in the following may be combined in any way, i.e. there is no limitation that certain described embodiments may not be combined with others.

A method for visualizing audio data corresponding to a piece of music may comprise: determining a structure of said piece of music based on said audio data, said structure comprising music structure segments such as intro, verse, chorus, break, bridge or the like, wherein each music structure segment has a music structure segment length representing the duration in time of a respective music structure segment. A segment, thus, corresponds to a category of a predetermined theory of music, wherein a sequence of categories is descriptive of the structure of a respective piece of music. The method may further comprise allocating a predetermined graphical object such as e.g. a circle, rectangular box, bar of a certain length or the like, to said piece of music, said graphical object having a predetermined size. The predetermined size may be chosen depending on the duration in time of the piece of music. The predetermined size may also be constant, i.e. independent of the length of the piece of music. The method may further comprise segmenting said graphical object into graphical segments, wherein each graphical segment has a size representing said music structure segment length. In other words, the size of a graphical segment indicates the length, i.e. duration, of a corresponding music structure segment. The method may further comprise displaying said graphical object and said graphical segments on a display.

It may, thus, be possible for a user to quickly get an overview of the structure of a piece of music, e.g. a song. For example, by looking at the segmented graphical object, the user may quickly see the length of an intro in comparison with a verse or the chorus. For example, if the chorus is rather short, e.g. 20 seconds, and the chorus lasts for a longer period of time, e.g. 1 minute, then the user will be able to quickly analyze this fact, because the graphical segment of the intro will be smaller than that of the chorus, i.e. the area of the graphical segment of the intro will be smaller than the area of the graphical segment of the chorus.

In an embodiment it is possible that a music structure segment represents an intro, a verse, a chorus, a break, a bridge, an outro or the like of the piece of music. Depending on the type of music theory applied, other suitable music structure segments may be used. Music structure segments may e.g. also be based on type of music instruments being used/played in a certain music structure segment or depending on whether a respective segment comprises vocals or not. It could also be that segments are defined by volume such that loud parts and quiet parts are chosen to be different music structure segments. For determining music structure segments, prior art algorithms/methods may be used, such as e.g. described in "Theory and evaluation of a Bayesian music structure extractor" by S. Abdallah et al. published in Proceedings of the 6th International Conference on Music Information Retrieval, London, UK, 11 to 15 September 2005, ISMIR 2005, the contents of which is hereby included by reference.

In a further embodiment, graphical segments corresponding to the same type of music structure segments are displayed in the same style, format and or color. For example, the same color may be used for music structure segments representing the chorus. For example, a first color may be used for a music structure segment representing an intro, and a different second color may be used for a music structure segment representing the chorus. If the chorus occurs several times within said piece of music, then the respective music structure segments may be displayed in the same color and will be recognized by the user. It is possible that a respective legend or key be provided explaining to the user which color is used for which type of music structure segment. Thus, the user may quickly identify the structure of the song by differentiating the colors and different sizes of the respective graphical segments representing the music structure segments. If for example a piece of music has the following structure: intro, chorus, verse, chorus, then the user may see this structure directly from the graphical segments within the graphical object. Because each piece of music has a different structure with music structure segments of different lengths and different orders, it is possible to visualize the audio data/piece of music in a unique way, i.e. the segmented graphical object corresponding to a piece of music will be different for each piece of music/song. Thus, the user may identify from the displayed segmented graphical object a certain song. Because different styles of music may have different but similar structure, the user may also determine what type of music a certain piece of music belongs to. For example a rock song may have a typical pattern of the segmented graphical object that is different from a typical patter of a pop song. Thus, the user may be able to browse large music data bases by only looking at the segmented graphical objects representing the structure of the respective music pieces/songs.

Moreover, if e.g. a legend or key is provided, indicating which color is used for which type of music structure segment, e.g. a different color may be chosen for intro, chorus, verse, bridge, break and so forth, then the user may be enabled to directly select a part, i.e. music structure segment, of the piece of music he wants to listen to. For example, the user may only want to listen to the first instance of the chorus. Then, by looking at the segmented graphical object, the user can directly see the first instance of the chorus and e.g. select it by pointing to it via a graphical user interface and the chorus will be played.

In a further embodiment, the method may comprise arranging the order of the graphical segments in accordance with the order of occurrence of a respective music structure segment within the piece of music. If e.g. the graphical object is chosen to be a circle, then an annulus representing the intro may be arranged along the outer circumference of the circle. If e.g. after the intro the chorus follows, then a further concentric annulus representing the chorus may be arranged adjacent to the first concentric annulus, i.e. inside the first concentric annulus. This arrangement is in accordance with vinyl records for storing music that are read from the outside towards the middle of the record when being played. This arrangement will be quickly understood and accepted by a lot of users since they are often familiar with vinyl records. Of course, in another embodiment, the order of graphical segments may be arranged starting from the middle of a circle towards the outer circumference, i.e. a graphical segment representing the first music structure segment of a song will be arranged in the middle of the circle.

The method may further comprise selecting a graphical segment by a user, and playing at least part of an audio segment corresponding to the music structure segment of the selected graphical segment. The selection may be enabled by e.g. a graphical user interface, and it is thus possible for a user to directly jump to a desired position within a piece of music.

This is analogous to playback by a disc-jockey (DJ) of a vinyl record. Of course, it is easy to place the needle of the record player between tracks on a disc since the groove is wider, but often the DJ can look at the texture of the grooves in the vinyl record to locate a position on the disc within a track where for example drum beats change or a chorus begins.

As mentioned, the structure of the piece of music may be determined based on an algorithm of automatic music structure extraction, such as e.g. described in "Theory and evaluation of a Bayesian music structure extractor" by S. Abdallah et al. published in Proceedings of the 6th International Conference on Music Information Retrieval, London, UK, 11 to 15 September 2005, ISMIR 2005.

In a further embodiment, it is possible that the method comprises receiving lyrics information for the piece of music, said lyrics information comprising at least part of the lyrics of the piece of music and lyrics structure information indicating to which music structure segment a respective lyrics part of the at least part of the lyrics belongs to, and allocating at least a part of the at least part of the lyrics to a corresponding part of the audio data based on speech recognition of e.g. vocal parts of the audio data, and determining or modifying the structure based on the allocation and based on the lyrics information. In other words, it may be possible to provide lyrics information comprising the lyrics of a song and lyrics structure information, i.e. segment information, indicating which words of the lyrics belong to a certain music structure segment. For example in the pop song "Sorry" by Madonna, the following lyrics information may be used:
Intro:
Je suis desolée ...
Bridge:
I've heard it ...
Chorus:
I don't wanna ...
Please don't say ...
I've heard it all ...
Verse:
You're not half the man you think you are ...
Chorus:
I don't wanna ...
Verse:
Don't explain yourself cause talk is cheap ...
Bridge:
Gomen nasai ...
Chorus:
I don't wanna ...
Outro:
Don't explain yourself cause talk is cheap ...
There's more important things ...
I don't wanna ...

The above information, i.e. the "lyrics information" may then be used in a speech recognition process, wherein the (known) lyrics are matched to the corresponding audio data, i.e. the words of the lyrics are allocated to a corresponding part of the audio data. Because it is a priori known to which music structure segment a respective part of the lyrics corresponds to the structure of the piece of music may be determined by segmenting the audio data in accordance with the lyrics information. In other words, by mapping the (known) lyrics to the audio data and segmenting the audio data based on the lyrics structure information, i.e. the information to which music structure segment a respective part of the lyrics belong to, it is possible to determine or refine the structure of the piece of music. This can be done completely independent from determining the structure based on the algorithm of automatic music structure extraction.

However, in a further embodiment, it is possible to apply both possibilities for music structure extraction, i.e. to apply an algorithm of automatic music structure extraction and then apply speech recognition as explained above. The music structure segments determined by the algorithm of automatic music structure extraction and the music structure segments determined by applying speech recognition may be combined. It is, for example, possible to first apply an algorithm of automatic music structure extraction for determining music structure segments and then correct or modify the determined segments by applying the speech recognition as explained above. The combination of the application of an algorithm of automatic music structure extraction and speech recognition may lead to a higher accuracy of the segment boundaries of the music structure segments in the piece of music. However, depending on the availability of computational resources or the like it may be suitable to only use one of the above explained possibilities, i.e. an algorithm of automatic music structure extraction or speech recognition.

In a further embodiment, the following steps may be performed additionally or alternatively: receiving keyword information for said piece of music, said keyword information comprising keywords contained in the lyrics of said piece of music and keyword structure information indicating to which music structure segment a respective keyword belongs to; spotting at least part of the keywords in the audio data based on keyword spotting of e.g. the vocal parts of the audio data, and determining or modifying the structure based on the spotted keywords and based on the keyword information. Keyword spotting may be suitable if computational resources are sparse and/or if respective powerful algorithms for keyword spotting are available.

In the example above, the following may be an example of keyword information:

| Music structure segment | Keyword(s) |
|---|---|
| Intro | Lo siento |
| Bridge | I've heard it all before |
| Chorus | Care of myself |
| Verse | I've listened to your lies |
| Chorus | Care of myself |
| Verse | Hearing you speak |
| Bridge | Gomen nasai |
| Chorus | Care of myself |
| Outro | Care of myself |

It is possible to select words as keywords in the different music structure segments based on linguistic knowledge. For example, it is possible to select keywords that are easy to spot, i.e. keywords that generally lead to a high recognition rate. In order to select suitable keywords, it may be possible to perform a grapheme to phoneme conversion and select sequences of phonemes that are likely to lead to a high recognition rate of respective keywords.

Because the keyword information indicates to which music structure segment a respective keyword belongs to it is possible to determine the structure of the piece of music.

The keyword spotting may be applied additionally or alternatively to the above explained music structure extraction and/or speech recognition.

In an embodiment it is also possible that the method comprises: receiving meta data for the piece of music, wherein the meta data indicate at least part of instruments used in the piece of music and/or vocal information which indicate if vocal parts are present in the piece of music or not; determining time-based instrumental/vocal information indicating which instruments are playing at which time and/or if vocals are present or not at a certain point in time of the piece of music, wherein the time-based instrumental vocal information is determined based on recognition and/or spotting of the instruments and/or said vocal information; allocating said time-based instrumental vocal information to a respective graphical segment; and displaying at least part of said time-based instrumental vocal information together with a respective graphical segment. Thus, the user may quickly analyze the piece of music because he can see which instruments are played within a respective music structure segment and/or if vocals are present or not in the respective music structure segment. This gives the user additional information about the piece of music in an intuitive way.

In a further embodiment, the graphical object may be a circle and at least one graphical segment may correspond to an annulus within said circle or to a concentric circular segment. Graphical segments could also be concentric portions of a spiral arrangement. By choosing the same color or format for the same type of music structure segments/graphical segments, the above explained vinyl record type presentation of the piece of music may be achieved.

It may be possible that a first annulus corresponding to a segment at the beginning of the piece of music, e.g. an intro, is arranged along the outer circumference of the circle and following annuli corresponding to segments following said segment at the beginning, e.g. in the example of the Madonna song above: bridge, chorus, verse, chorus, verse, bridge, chorus, outro, of the piece of music are arranged between the first annulus and the centre of the circle in an order corresponding to the order of occurrence within the piece of music.

In a further embodiment, it is also possible that the graphical object is a rectangular box and the graphical segments correspond to rectangular segments. The rectangular box may also be in a form of a bar having a certain length. In general, the graphical object may be chosen depending on the form of the display on which the graphical object is displayed. For example, if the display has a lengthy shape, then the graphical object may be chosen to be a bar fitting in the lengthy display. On the other hand, if the display has a rather quadratic form, then it may be suitable to choose a circular shape of the graphical object.

In a further embodiment, a feature vector may be determined based on the structure, and the feature vector may be used for finding further pieces of music having a similar structure as the piece of music. In other words, for a plurality of pieces of music, a feature vector may be calculated. Similar feature vectors corresponding to pieces of music having a similar structure may be determined by a correlation of the different feature vectors or by calculating an Euclidean distance between them.

In a further embodiment, it may also be possible that a visualization is determined for a plurality of pieces of music based on the step of determining a structure, the step of allocating a predetermined graphical object the step of segmenting and/or the step of displaying, wherein respective graphical objects of pieces of music having a similar structure are displayed close or next to each other. In other words, by visualizing a plurality of pieces of music as described above, it may be possible to organize a large number of pieces of music such that pieces of music having a similar structure and, therefore, also a similar visualization will be displayed close to each other. This may allow a user to get an overview of a large number of pieces of music.

In a further embodiment, the similarity between two pieces of music may be determined by determining a correlation value based on beginning and/or end times of music structure segments of the same type, said beginning and/or end times corresponding to music structure segments of said two pieces of music.

In a further embodiment, the visualization may be determined for a plurality of pieces of music, and for each visualization a feature vector may be determined from a respective visualization and each is arranged on a self organizing map such that closely correlating visualizations appear close to one another on the map, wherein the visualizations are displayed when a user uses a cursor to hover over an area of the self-organizing map.

A device for visualizing audio data corresponding to a piece of music may comprise: a storage configured to store at least part of the audio data, for example a hard disk or other type of memory. Alternatively or additionally it is also possible that the device comprises a receiver configured to receive audio data via a wireless link, e.g. by downloading or streaming. The device may further comprise a music structure extractor configured to determine a structure of the piece of music based on the audio data, the structure comprising music structure segments each having a music structure length, a data processing unit configured to allocate a predetermined graphical object to said piece of music, said graphical object having a predetermined size and to segment the graphical object into graphical segments, wherein each graphical segment has a size representing said music structure segment length, and a display configured to display the graphical object and the graphical segments.

The device may be a hand-held device, e.g. a mobile phone, Personal Digital Assistant (PDA) or a small music storage device, such as a Walkman (Trademark). The device may also be a personal computer (PC).

The device may further comprise a speech recognition engine configured to receive lyrics information for the piece of music, said lyrics information comprising at least part of the lyrics of the piece of music and lyrics structure information indicating to which music structure segment a respective lyrics part of said at least part of lyrics belongs to, the speech recognition engine further being configured to allocate at least a part of said at least part of the lyrics to a corresponding part of said audio data based on speech recognition of vocal parts of the audio data, wherein the data processing unit is further configured to determine or modify the structure based on the allocation and based on the lyrics information.

A further embodiment of the invention relates to a system comprising a user device and a server. The user device may be configured to receive a visualization of a piece of music, said user device including a display configured to display the visualization. The user device may receive the visualization from the server. The server may include a storage configured to store at least said piece of music, a music structure extractor configured to determined a structure of said piece of music, said structure comprising music structure segments, each having a music structure segment length, and a data processing unit. The data processing unit may be configured to generate the visualization that is then received by the user device. The visualization may comprise a predetermined graphical object that is allocated to the piece of music, the graphic object having a predetermined size and being segmented into graphical segments, wherein each graphical segment has a size representing the music structure segment length. The server may further have a data transfer mechanism configured to provide the visualization to the user device. The server may e.g. be a web server and the user device may e.g. be a mobile device such as e.g. a personal media player with a Wi-Fi connection, i.e. with a wireless connection, or the like. It is also possible that the user device is a mobile music storage device of small dimensions having e.g. a hard disk or other storage.

According to a further embodiment, the user device may have functionality to allow a user to select a graphical segment of the visualization, and upon selection of a certain graphical segment, the server may transmit audio data to the user device, said audio data being a part of said piece of music and corresponding to the certain graphical segment or to the entire piece of music. In other words, by selecting a graphical segment of the visualization, the user may start downloading, streaming or otherwise transferring at least a part of the piece of music to his mobile device, which part corresponds to the graphical segment and/or to the entire piece of music.

A graphical user interface may comprise a predetermined graphical object representing a piece of music and graphical segments each having a size representing a music structure segment length of a respective music structure segment of a piece of music, and a selector configured to select at least one of the graphical segments.

The selector may have a design of a needle typically used for picking up the information of a vinyl record. This may lead to a broader acceptance of consumers that will be reminded of vinyl records.

According to a further embodiment of the invention, a website may be provided comprising at least one visualization of a piece of music, said visualization comprising a predetermined graphical object segmented into graphical segments, wherein each graphical segment has a size representing a music structure segment length of a music structure segment of said piece of music, and a selection mechanism configured to allow selection by a user of a certain graphical segment and to transfer audio data to a user device, said audio data corresponding to a respective music structure segment represented by said certain graphical segment or to the entire piece of music. In other words, a website may be provided in which a user is able to preview a piece of music before downloading, streaming or otherwise transferring it to his user device, wherein the preview corresponds to a portion of predefined length of the piece of music less than its entire duration, e.g. 30 seconds, and the user can use the visualization to select the preview portion for transfer. In other words, the website may allow the user to select only a part of a piece of music for download/ streaming based on the visualization of the piece of music. There may be rules implemented on the server to prevent a user from requesting/downloading consecutive portions of a piece of music, e.g. of a song. For example, only two different portions of a song may be selectable within one twenty four hour period.

The website may also allow the user to select a portion from the visualization for extraction of the song or a part thereof as a ring tone for a mobile phone. Thus, the user device may be a mobile phone and the audio data may be at least partly used as a ring tone for the mobile phone.

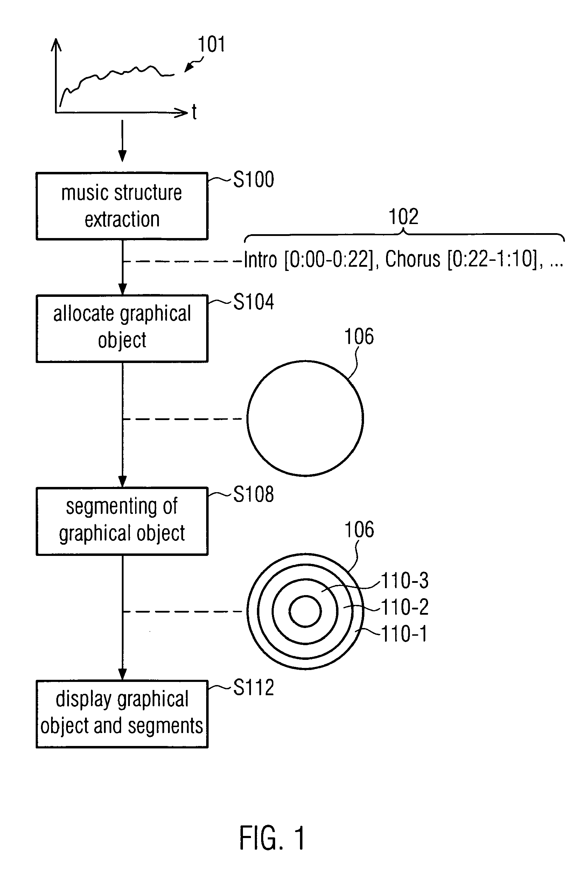

Fig. 1 shows steps that may be performed for visualizing audio data. In Fig. 1, audio data 101 is received in a music structure extraction step S100. Further, within the music structure extraction step S100, an automatic method for music structure extraction is performed in order to determine music structure segments of audio data 101. The audio data 101 may correspond to a song and the music structure segments 102 may correspond to music structure segments such as intro, chorus, verse or the like. In the example of Fig. 1, an intro of the audio data 101 lasts from the beginning of the song corresponding to the audio data 101 until 22 seconds. Further, a chorus lasts from 22 seconds to 1 minute and 10 seconds. After the chorus further music structure segments such as e.g. a verse may follow.

In a following graphical object selection step S104, a predetermined graphical object may be allocated to the piece of music, wherein the graphical object has a predetermined size. In the example of Fig. 1, a circle 106 is used as graphical object.

In a following graphic segmenting step S108, the circle 106 is segmented into concentric annuli 110-1, 110-2 and 110-3. In the example of Fig. 1, the graphical segment 110-1 may correspond to the intro of the music structure segments 102 and the segment 110-2 may correspond to the chorus of the music structure segments 102. Further, the area of the segment 110-1 representing the intro is smaller than the area of the segment 110-2 representing the chorus, because the duration of the chorus is longer than that of the intro. The segment 110-3 may correspond to a verse following the chorus.

In a further displaying step S112, the segmented graphical object, i.e. the circle 106 comprising the segments 110-1 to 110-3 is displayed.

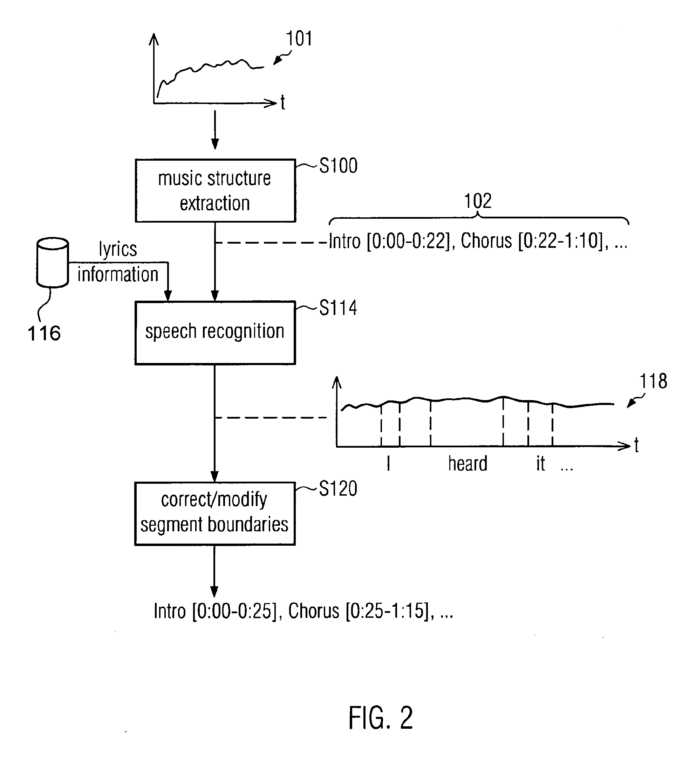

Fig. 2 shows a further embodiment where audio data 101 are segmented into music structure segments in the music structure extraction step S100. The results of the music structure extraction step 100 are music structure segments 102. However, in Fig. 2, after the music structure extraction step S100 a speech recognition step S114 is performed. The speech recognition step S114 may be based on the audio data 101 and lyrics information provided by a lyrics information data base 116. The lyrics information data base 116 provides e.g. the above explained lyrics information corresponding to the audio data 101. The result of the speech recognition step 114 is time-based lyrics information 118, where the audio signal 101 is mapped with the words of the lyrics.

After the speech recognition step S114, a correction step S120 may follow in which the segment boundaries of the music structure segments 102 are modified based on the time-based lyrics information 118. In the example of Fig. 2, the boundary of the intro is modified and the end of the segment intro is now 25 seconds after the beginning instead of 22 seconds. Further, the beginning and end times of the chorus are modified and the chorus now lasts from 25 seconds to 1 minute and 15 seconds instead of from 22 seconds to 1 minute and 10 seconds.

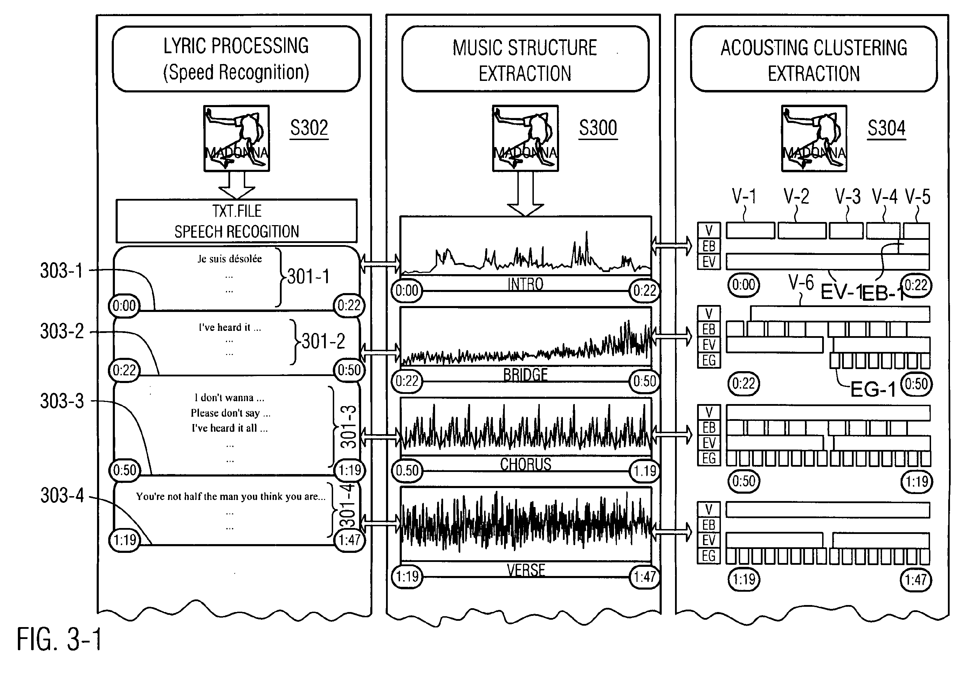

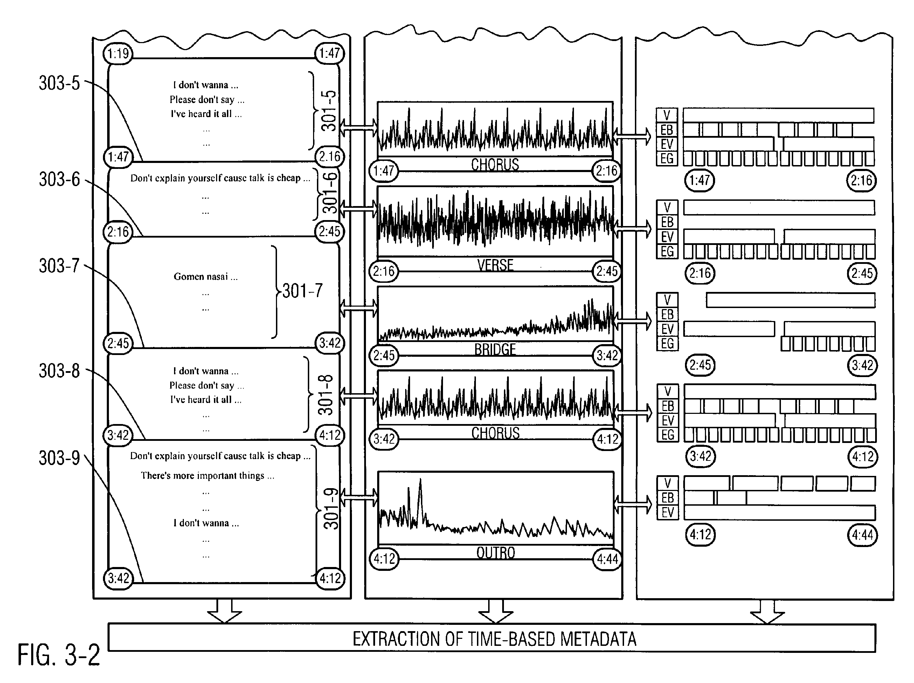

Fig. 3 shows an example, where music structure segments are determined for the above-mentioned song "Sorry" of Madonna. In the middle of Fig. 3, a music structure extraction part S300 is shown, in which the energy of the different music structure segments is shown. The energy is an example of a feature used for music structure extraction, however, other features may be applied and the music structure extraction, thus, may be based on other features.

In the lyric processing part S302, lyrics information 301 is shown together with boundary information 303 indicating the boundaries of the different music structure segments. As explained above, the boundaries 303, e.g. the start and/or end points of the music structure segments may be determined or refined or verified by speech recognition of the lyrics within the audio signal.

The acoustic clustering extraction part S304 gives information about the different instruments played within a corresponding music structure segment and whether vocals are present or not within the respective music structure segment. Further, the acoustic clustering extraction part S304 gives the user information at which time vocals are present and at which time which instruments are played. For example, in the intro lasting from 0:00 to 0:22, there are five vocal parts V-1 to V-5. Further, at the end of the intro there is a first electric base part EB-1. During the whole intro electric violence EV are played.

The time-based vocal/instrument information is useful for the user, because the user can more easily jump to a desired position within the piece of music. For example, if the user wants to directly jump to the lyrics "Ik ben droevig" in the intro music structure segment the user may move a pointing device to the third vocal part V-3 and select the beginning of the third vocal part V-3. The system may then start playing the song at this position, i.e. the system may start playing the audio data beginning with the audio part where the lyrics "Ik ben droevig" is sung.

The information in the acoustic clustering extraction part S304 may therefore be helpful for the user to select more precisely which exact part of a song he would like to listen to.

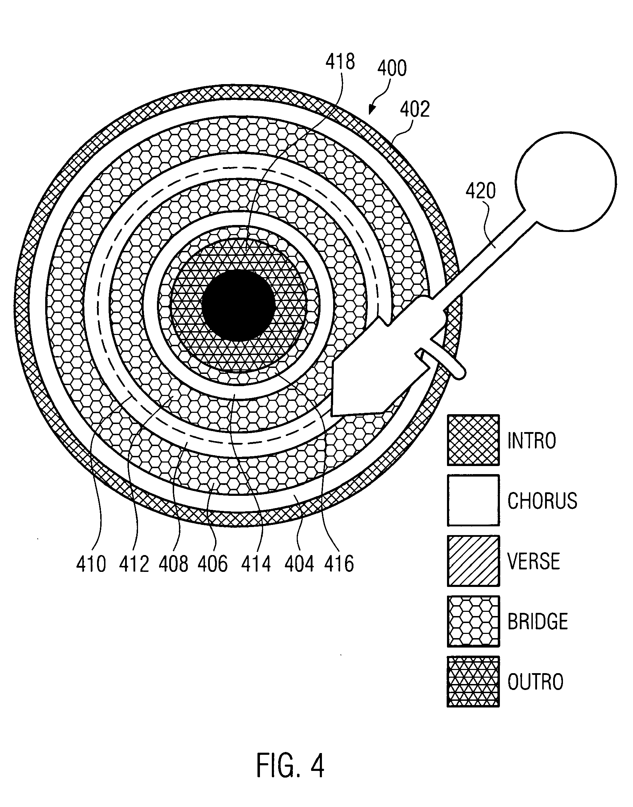

Fig. 4 shows a circle 400 corresponding to a song having a structure with the following ordered sequence of music structure segments: intro, chorus, bridge, chorus, bridge, chorus, bridge, and outro (see also key in Fig. 4). For visualizing this song, i.e. the corresponding audio data, the circle 400 representing the song is segmented into segments or annuli each having a different size corresponding to the length of the respective music structure segment. Therefore, the circle 400 has a first annulus 402 corresponding to the intro, a second annulus 404 corresponding to a first occurrence of the chorus, a third annulus 406 corresponding to a first bridge part, a fourth annulus 408 corresponding to a second occurrence of the chorus, a fifth annulus 412 corresponding to a further bridge part, a sixth annulus 414 corresponding to a third occurrence of the chorus, a seventh annulus 416 corresponding to a further bridge part, and an eighth annulus 418 corresponding to the outro. As can be seen, the different bridging parts 406, 412 and 416 are displayed in the same style, e.g. in the same color. Further, the different occurrences of the chorus 404, 408 and 414 are also displayed in the same style. Thus, the song is displayed by a unique pattern in the following also referred to as "fingerprint" of the song.

The circle 400 comprising the annuli may be part of a graphical user interface comprising a selector 420. By moving the selector 420 over the different annuli, the user is enabled to select a certain position within the circle 400 corresponding to a certain position within the song. In the example of Fig. 4, the user selects a position 410 within the second occurrence of the chorus corresponding to the fourth annulus 408. In one embodiment, upon selection, the system may start playing with the beginning of the second occurrence of the chorus. In another embodiment, the system may start playing at the exact position of the song corresponding to the position of the selector 420. Thus, it is possible that the user may directly jump to a certain position within a music structure segment. As shown in Fig. 4, the user selects a position in the middle of the fourth annulus 408 and the system may start playing the song at a position in the middle of the second occurrence of the chorus of the song.

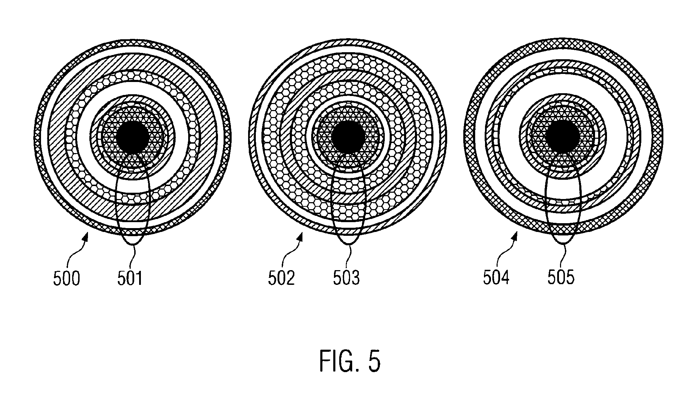

Fig. 5 shows "fingerprints", i.e. visualizations, of different songs with different patterns resulting from the different structures of the songs, i.e. the different sequence and length of music structure segments.

In the example of Fig. 5, a first circle 500 comprising first annuli 501, a second circle 502 comprising second annuli 503 and a third circle 504 comprising third annuli 505 is shown. The first circle 500 and first annuli 501 represent the song "It's a beautiful day" by U2, the second circle 502 and second annuli 503 represent the song "Blowing in the wind" by Bob Dylan, and the third circle 504 and third annuli 505 represent the song "Rendezvous" by Basement Jaxx.

As can be seen in Fig. 5, the structure of the three songs is unique for each song and a user, therefore, can very quickly differentiate different songs from each other. This may be helpful when browsing large musical databases, i.e. the visualization may help a user to accomplish his/her task of finding a certain piece of music or a piece of music of a certain style more efficiently. In the example of Fig, 5, the same format is used for the same types of annuli. Thus, in the example the user may see that for example in the song "It's a beautiful day" by U2 the chorus is repeated two times, each time with a different length (the chorus is represented by the second and fifth circular segment from the outside of the first circle 500). In relation to the verse parts (third and sixth annuli) the chorus is rather short.

In comparison, in the song "Rendezvous" by Basement Jaxx the chorus (second and fifth annuli from the outside of circle 504) is rather long in comparison to the first (third and sixth annuli from the outside of circle 504).

Thus, the user can quickly evaluate/judge the type of song. For example, if the verse is rather short in comparison to the chorus and/or the chorus is repeated very often, this may indicate a modern pop song. Contrary, if the chorus is e.g. rather short in comparison to the verses and/or is only repeated once or twice, then this may indicate a classic rock song.

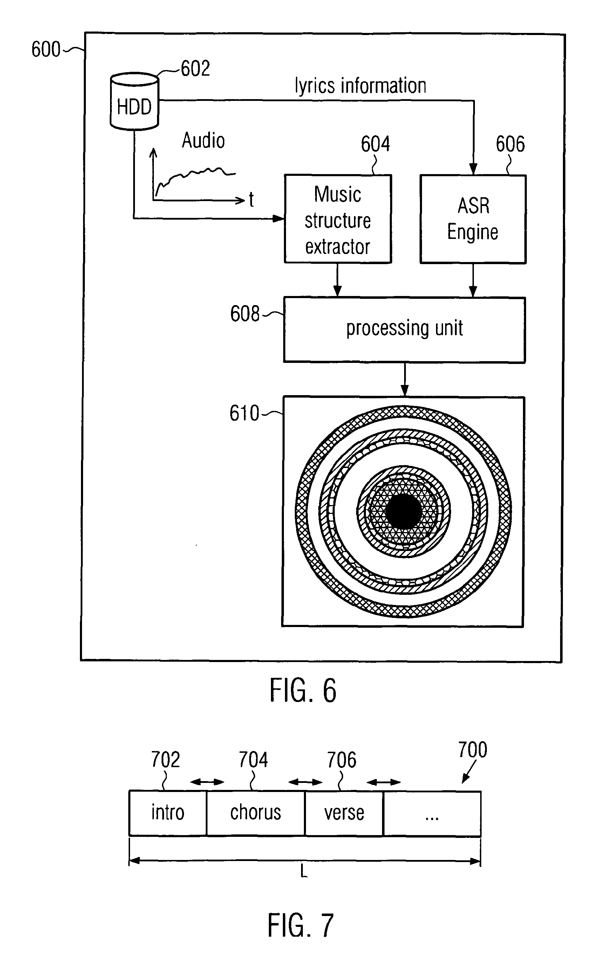

Fig. 6 shows a handheld music storage device 600 comprising storage 602. The storage 602 stores audio data corresponding to songs and lyrics information. The audio data of a song may be supplied to a music storage extractor 604 and/or to an automatic speech recognition engine 606. The lyrics information may be supplied to the automatic speech recognition engine 606.

The output of the music structure extractor 604 and the automatic speech recognition engine 606 is input into a processing unit 608. Thus, the segment boundaries of the music structure segments determined by the music structure extractor 604 and the automatic speech recognition engine 606 are input into the processing unit 608, and the processing unit 608 merges, e.g. by averaging, the boundaries, i.e. the starting and ending points of the different music structure segments determined by the music structure extractor 604 and the automatic speech recognition engine 606.

Further, the processing unit 608 may determine the size of the graphical segments, which size depends on the length of the different music structure segments. The processing unit 608 controls a display 610 and displays a graphical object, e.g. a circle, having graphical segments, e.g. circular segments, also referred to as annuli, depending on the length of the corresponding music structure segments.

Fig. 7 shows another embodiment of a graphical object. In the example of Fig. 7 the graphical object is a rectangular bar 700 representing a song. The total length L of the bar represents the complete duration of a piece of music. The rectangular bar 700 comprises rectangular graphical objects 702, 704, 706, .... Each rectangular graphical object 702 to 706 represents a respective music structure segment. In the example of Fig. 7, rectangular graphical object 702 represents an intro, rectangular graphical object 704 represents a chorus and rectangular graphical objects 706 represents a verse. The length/size of the rectangular graphical objects represent the length of the respective music structure segment. Thus, a user may quickly see the structure of a song. Further, the user may quickly select a desired rectangular graphical object and the system may start playing the beginning of the respective music structure segment or alternatively the system may start playing the piece of music at the position the user points to with e.g. a pointing device which is part of a graphical user interface.

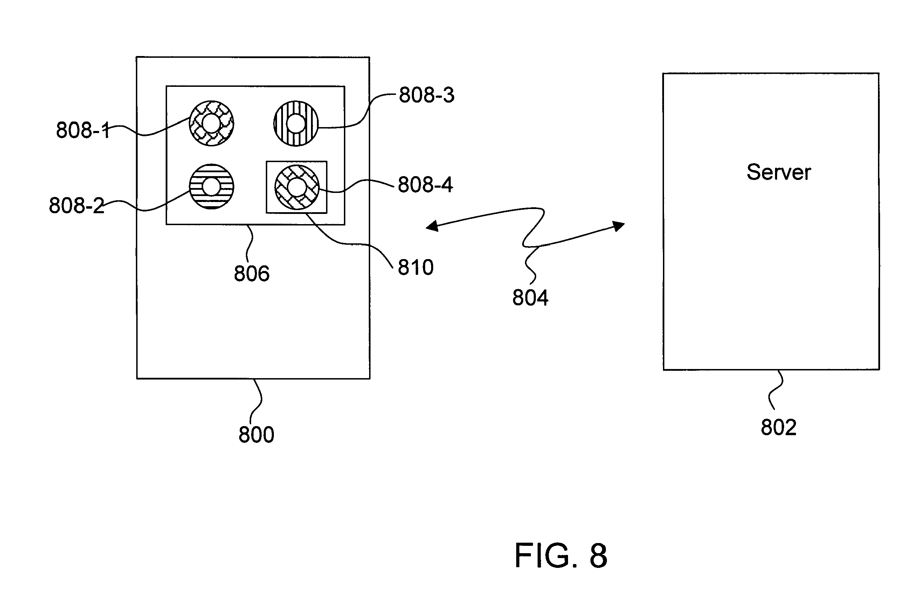

Fig. 8 shows a mobile device 800 communicating with a server 802 via a connection 804. Connection 804 may e.g. be a wireless connection and/or internet connection. Mobile device 800 comprises a display 806 that allows displaying visualizations 808-1, 808-2, 808-3, 808-4, .... The data necessary for generating the visualizations 808 may be provided by server 802. That is, server 802 may determine respective structures of the pieces of music corresponding to visualizations 808. The data may e.g. comprise beginning and/or end times of music structure segments of the pieces of music and/or the type of the music structure segment, such as e.g. intro, verse, chorus, break, bridge, outro or the like.

According to this embodiment, by looking at the visualizations 808, the user may get an idea of the structure and type of piece of music. Mobile device 800 may also comprise a graphical user interface having a cursor 810 that can be used to select a certain visualization and corresponding piece of music. In the example of Fig. 8, cursor 810 is placed over visualization 808-4, and upon selection of visualization 808-4, the system may start transferring the piece of music corresponding to visualization 808-4 from the server to the mobile device 800. Thus, it may not be necessary to transmit all pieces of music corresponding to the visualizations 808 displayed on the mobile device 800. It may be sufficient to only transmit pieces of music, i.e. audio data, from the server 802 to mobile device 800 upon selection of a certain visualization 808. In a further embodiment, the cursor may also allow selecting only one or several graphical segments of the visualizations 808-1, 808-2, 808-3, 808-4, .... If only one or several graphical segments are selected by a user, it is possible that only a part of a respective song be transferred to mobile device 800, which part corresponds to the selected graphical segments.

The following elucidations may help a person skilled in the art to get a better understanding of a method/device for visualizing audio data.

There may be two parts, i.e.
A) a meta data alignment part, and
B) a visualization part.

In the meta data alignment part, different meta data including text units are aligned with an acoustical signal of a piece of music, e.g. a song. The meta data alignment part thereby may comprise the following three main parts:
A1) lyric processing,
A2) structure extraction, and
A3) acoustic clustering extraction.

As input, the lyrics of a piece of music may be used and corresponding segment information, i.e. the lyrics may comprise categories representing intro, bridge, chorus, verse and the like.

The following steps may be performed:
- Structure extraction thereby determining an estimate for the segment boundaries. There may be a margin of error associated with each segment boundary of a respective music structure segment.
- Additionally or alternatively, automatic speech recognition may be performed aligning the predetermined lyrics with the acoustic signal. In one embodiment, it may be possible that acoustic keyword spotting is used as algorithm for the automatic speech recognition process.
- The results of the lyric processing and the structure extraction may be merged, i.e. the estimate for the boundaries of the music structure segments determined in structure extraction may be modified or corrected by the results obtained from lyric processing or vice versa.
- Optionally acoustic clustering extraction may be performed. Thereby, the meta data available for the piece of music from a meta data base may be used. If e.g. the meta data for a song indicates that the song comprises electric base, electric violence and electric guitar, then during acoustic clustering extraction, the acoustic data may be searched for exactly these instruments. Because it is a priori known which instruments are contained within acoustic data, it may be easier to spot the instruments based on e.g. a frequency analysis.

In the visualization part B, the determined boundaries of the different music structure segments of the piece of music may be used as a basis for fingerprint displaying of the song. Thus, time-based meta data may be extracted that enable the fingerprinting of music in terms of lyrics, instrument clusters and structure.

Using indexing and extracting methods, linguistic and acoustic time-based meta data may be generated for each individual song. These meta data may describe the content divided into instrument clusters, lyrics and modules (intro, chorus, ...) for every definite time stamp within the song.

Thus, categorization, selection, search and representation of media content may be enabled to arrange, discover and explore media for content distribution, recommendation and retrieval services.

In prior art, electronic music distribution (EMD) systems may use a classification and recommendation that is based on description meta data (e.g. artist, title, year, genre, mood, etc.) and only return search results and/or recommendations based on personalized or collaborative-based content information (like/dislike, rating score, etc.) and aggregated song criteria (more from this artist, record, genre, mood, etc.).

Such prior art systems may not differentiate the discrete modules with individual characteristics that holds more intrinsic information.

By using indexing and extracting methods, linguistic and acoustic time-based meta data allows to generate meta data containing the definite position with the song structure (time stamp), the instruments that are being played as well as the exact lyrics that are being sung on that particular time stamp for any particular song or media item. The following parts may be executed.

### (I) Structure extraction

By sampling and comparing the signal patterns at each time stamp (signaling, modeling, processing) it may be possible to identify the modules, i.e. music structure segments, (intro, bridge, chorus, verse and outro) that composes the song. The modules may then be brought into chronological order to describe the unique structure and fingerprint of the song.

### (II) Lyric processing

Based on text file and language processing methods, the text may be associated with the modules described in (I).

By applying text/speech recognition methods it is also possible to identify the modules based on the text allowing validating or correcting the results of (I), thus improving the robustness of the structure and lyric extraction.

### (III) Acoustic clustering extraction

Using the description of the structure of (I) and (II) and applying signal processing methods, the played instruments and the vocals may be identified for each time stamp and associated with the modules contained in the song, acoustic clustering processing. This may enable an even more detailed fingerprinting of discrete parts of an individual song.

Vocals may be differentiated in male, female and choir. Instruments may be differentiated in strings, percussion, electric, acoustic, horns, brass and so forth.

### Fingerprinting:

The intrinsic meta data may enable the fingerprinting according to the modules and may be visualized using the pattern known from vinyl, which shows a unique dark and lighter pattern based on the pressing and is directly associated to the modules described above below.

### Modules (music structure segments):

Most music shows a coherent song structure, which is described by the following modules, also referred to as music structure segments:

| | |
|---|---|
| Intro: | Introduction or intro is usually one verse composed by three or four phrases used to introduce the main theme or to give a context to the listener. |
| | |
| Verse: | When two or more sections of the song basically have identical music and different lyrics, these sections may be the verses of the song. A verse, thus, roughly corresponds with a poetic stanza. Lyrics and verses tend to repeat less than they do in choruses. |
| Chorus: | A chorus is the refrain of a song. It assumes a higher level of dynamics and activity. When two or more sections of lyric have almost identical text, these sections are instances of the chorus. A verse repeats at least twice with none or little differences between repetitions, becoming then, the most repetitive part of a lyric. It is also where the main theme is more explicit. The chorus is generally also the part which listeners tend to remember. |
| | |
| | In popular music, chorus is used to mean the refrain of a song and assumes a higher level of dynamics and activity, often with added instrumentation. The Chorus may be a sectional and/or additive way of structuring a piece of music based on the repetition of one formal section or block played repeatedly. When two or more sections of the song have basically identical music and lyrics, these sections are probably instances of the chorus. |
| | |
| Bridge: | In song-writing, a bridge is an interlude that connects two parts of that song. As verses repeat at least twice, the bridge may then replace the third verse or follow it thus delaying the chorus. In both cases, it leads into the chorus. The chorus after the bridge is usually last and is often repeated in order to stress that it is final. If, when one expects a verse or a chorus, one gets something that is musically and lyrically different from both verse and chorus, it is probably the bridge. |
| | |
| Outro: | The outro is also referred to as ending or coda. The outro is not always present; this part is located at the end of a lyric and tends to be a conclusion about the main theme. |

### Usage scenarios:

Popular music may be accessible to a wide audience, distributed through the mass media as a commercial product, covering most of the modern music genre like rock, pop, dance and electronic music.

The graphical user interface (GUI) may be based on the vinyl, i.e. fingerprinting as explained above, since the stamping is varying depending on the actual instruments played and this can be recognized on vinyl. The typical vinyl record is a flat disk rotating at a constant angular velocity, with an inscribed spiral groove in which a needle rides. By applying different colors or structure to the distinct parts based on acoustic time-based meta data, the user may interact in such a way that he/she can locate specific lyrics within the song, position him/herself within a particular part of the song structure or even ask the system to give him/her song recommendations that share the same combination of instruments.

Thus, optimized search functionalities may be realized. Based on the visualized music interface, the user is not only able to search for specific aggregated song criteria like artist, title and genre, but also to search for specific isolated song criteria like instruments and/or specific words/sentences (lyrics).

Also, navigation and browsing functionalities may be provided. Based on the visualized music interface, the user may be able to navigate (stream) through a song based on a visualized song structure. The user can choose to go directly to the chorus of a song or to navigate directly to a particular part in the song where a specific segment of the lyrics is being sung.

Also, optimized recommendation functionalities may be realized. Based on the visualized music interface, the user may be able to ask the system for specific recommendations matching his/her preferred isolated song criteria, e.g. "Please recommend me songs that have a similar instrument, voice tone ..." regardless of whether the user likes or dislikes the song as a whole.

Thereby, the information from the acoustic time-based meta data and the coherent structure may be used to visualize the relevant parts of the song.

Exploring or navigating through a song or audio content may be made more convenient using the above described graphical user interface since the user may be able to pick up the needle and stream through the song, i.e. a new way of fast forwarding may be realized while keeping track of the position within a song.

Also, an improved pre-listening may be realized. Pre-listen to music tracks in the current commercial offerings may usually only allow the initial 30 seconds of a song to be played. The visualization of the tracks as described above may allow the user to position the needle at the chorus or verse or at another music structure segment being marked with a specific color. Normally, e.g. the chorus of a song will be recognized or remembered more easily by the user and there may be a higher possibility that the user will purchase the song from e.g. an online store.

Thus, purchase may be stimulated and additional revenue for the record industry may be achieved.

Also, ring tones may be created. The chorus or any other part, i.e. music structure segment, of a song may be visualized in color pattern as explained above and the user may easily select the part he/she wants to have as a ring tone. The part of the music may be cut out and transformed into the appropriate mobile phone format. Then, the part may be transferred to the mobile phone via premium short-message-service (SMS), which may immediately allow for correct charging. This may allow the music service companies to participate in the highly successful ring tone business.

As explained above, fingerprinting, i.e. the visualization of audio data as explained above, is an approach to visualize a song as unique and individual. Thus, each song is displayed in a unique way depending on its structure and genre.

The following functionalities may be provided:
1. Stream through a song by using a visualized color-patterned interface.
2. Search songs based upon lyrics and go directly to that song segment.
3. Choose to go directly to the chorus or other parts of the song.
4. Search songs that contain specific instrument combinations and go directly to that song segment.

The following steps may be performed:
- Step 1: Structure extraction - identifying the modules that describe the structure of a song
   - The technology used for this process may be called signal modeling processing (analyzing and comparing similar structures within time stamps of the song).
   - This results in the extraction of time-based structure meta data.
- Step 2: Lyric extraction - assign the lyrics to each corresponding time stamp
   - The technology used for this process is called lyric assignment processing (comparing the text-based lyrics with the actual song lyrics with speech recognition techniques).
   - This results in the extraction of time-based lyric meta data.
   - In this process, there may also be a "structure feedback control" algorithm that validates the structure - identified in the signal modeling process (note: lyrics also determine the structure of a song).
- Step 3: Acoustic clustering extraction - identifying instrumental and acoustic clusters to each time stamp (vocals, electric drums, electric base, electric guitars, electric violence, synthesizers, ...)
   - The technology used for this process may be referred to as acoustic clustering extraction (defining similarities in acoustic sounds and clustering them to definite units).
   - This results in the extraction of time-based acoustic cluster meta data.
- Step 4: Visualization of the time-based meta data - in this process, the extracted time-based meta data are presented by a visualized music interface.
   - For popular music, a dynamic vinyl fingerprinting user interface may be used (based on a dynamic stream-through technology).

Therefore, it may be possible to use time-based meta data for better usage for intrinsic information contained in a piece of music. Further, it may be possible both for offline and online platforms and services to apply the described technology. The creation of a visualized music interface may help music lovers to discover and explore new music tracks in order to further improve existing personalized music recommendation systems. Thus, a new, easy and convenient music experience for the user may be enabled.

It may also be possible to apply the above to user-generated content. Tapping into the collective experiences, skills and ingenuity of hundreds of millions of consumers around the world is a complete departure from user generated music content model. Via the music visualization interface described above, which may be based on the fingerprinting and time-based meta data model, users may be able to share their own music productions. A user may be able to upload his song into a system which will automatically extract the necessary time-based meta data for visualization. Together with his/her editorial meta data the user may be able to share his work with the rest of the world. The business model behind may be a subscription-based profit sharing model.

It may be also possible to apply the above to dedicated target groups. There is a large market potential for niche markets in terms of songs and in terms of target groups. There is a back catalogue, older albums still fondly remembered by long time fans or rediscovered by new ones. There are live tracks, B-sides, remixes, even (gasp) covers. There are niches by the thousands, genre within genre within genre. For example, in the DJ community vinyl is not dead. Allover the world, thousands of professional and amateur DJs are running to all kind of specialized vinyl shops to discover new records to play, to share and to collect. By using the above described visualized fingerprinting technology, it could possible to offer the first real offer for DJs and electronic music lovers in order to discover and buy new tracks in the same way they used to - only better, faster and more centralized.

### The following may be also considered as possible embodiments:

A method for visualizing a structure of a piece of music, said structure comprising music structure segments each having a music structure segment length, said method comprising the steps of: allocating a predetermined graphical object to said piece of music, said graphical object having a predetermined size; segmenting said graphical object into graphical segments, wherein each graphical segment has a size representing said music structure segment length.

A means for visualizing audio data corresponding to a piece of music, comprising: means for determining a structure of said piece of music based on said audio data, said structure comprising music structure segments each having a music structure segment length; means for allocating a predetermined graphical object to said piece of music, said graphical object having a predetermined size; means for segmenting said graphical object into graphical segments, wherein each graphical segment has a size representing said music structure segment length; and means for displaying said graphical object and said graphical segments on a display.

A device for visualizing audio data corresponding to a piece of music, comprising: a wireless receiving unit configured to receive at least part of said audio data via a wireless connection; a music structure extractor configured to determine a structure of said piece of music based on said audio data, said structure comprising music structure segments each having a music structure segment length; a data processing unit configured to allocate a predetermined graphical object to said piece of music, said graphical object having a predetermined size and to segment said graphical object into graphical segments, wherein each graphical segment has a size representing said music structure segment length; and a display configured to display said graphical object and said graphical segments.

According to a further embodiment, there may also be provided a method for visualizing a structure of a piece of music, said structure comprising music structure segments each having a music structure segment length, said method comprising the steps of: allocating a predetermined graphical object to said piece of music, said graphical object having a predetermined size; segmenting said graphical object into graphical segments, wherein each graphical segment has a size representing said music structure segment length.

According to a still further embodiment, there may also be provided a method for visualizing audio data corresponding to a piece of music, comprising the steps of: determining a structure of said piece of music based on said audio data, said structure comprising music structure segments each having a music structure segment length; allocating a predetermined graphical object to said piece of music, said graphical object having a predetermined size; segmenting said graphical object into graphical portions, wherein each graphical portion has a size representing said music structure segment length; and displaying said graphical object and said graphical portions on a display.

According to a still further embodiment, there may also be provided a means for visualizing audio data corresponding to a piece of music, comprising: means for determining a structure of said piece of music based on said audio data, said structure comprising music structure segments each having a music structure segment length; means for allocating a predetermined graphical object to said piece of music, said graphical object having a predetermined size; means for segmenting said graphical object into graphical segments, wherein each graphical segment has a size representing said music structure segment length; and means for displaying said graphical object and said graphical segments on a display.

According to a still further embodiment, there may also be provided a device for visualizing audio data corresponding to a piece of music, comprising: a wireless receiving unit configured to receive at least part of said audio data via a wireless connection; a music structure extractor configured to determine a structure of said piece of music based on said audio data, said structure comprising music structure segments each having a music structure segment length; a data processing unit configured to allocate a predetermined graphical object to said piece of music, said graphical object having a predetermined size and to segment said graphical object into graphical segments, wherein each graphical segment has a size representing said music structure segment length; and a display configured to display said graphical object and said graphical segments.

## Claims

1. Method for visualizing audio data corresponding to a piece of music, comprising the steps of:
determining a structure of said piece of music based on said audio data, said structure comprising music structure segments each having a music structure segment length;
allocating a predetermined graphical object to said piece of music, said graphical object having a predetermined size;
segmenting said graphical object into graphical segments, wherein each graphical segment has a size representing said music structure segment length; and
displaying said graphical object and said graphical segments on a display.

2. Method according to claim 1, wherein a respective music structure segment represents an intro, a verse, a chorus, a break, a bridge, an outro or the like of said piece of music or a beginning of a respective music structure segment represents a key change in said piece of music.

3. Method according to claim 1 or 2, wherein graphical segments corresponding to the same type of music structure segment are displayed in the same style of format.

4. Method according to any one of the preceding claims, comprising
arranging the order of the graphical segments in accordance with the order of occurrence of a respective music structure segment within said piece of music.

5. Method according to any one of the preceding claims, comprising the steps of:
selecting a graphical segment by a user; and
playing at least part of an audio segment corresponding to the music structure segment of the selected graphical segment.

6. Method according to any one of the preceding claims, wherein said structure is determined based on an algorithm of automatic music structure extraction.

7. Method according to any one of the preceding claims, further comprising the following steps:
receiving lyrics information for said piece of music, said lyrics information comprising at least part of the lyrics of said piece of music and lyrics structure information indicating to which music structure segment a respective lyrics part of said at least part of the lyrics belongs to;
allocating at least a part of said at least part of the lyrics to a corresponding part of said audio data based on speech recognition of said audio data; and
determining or modifying said structure based on the allocation and based on said lyrics information.

8. Method according to any one of the preceding claims, further comprising the following steps:
receiving keyword information for said piece of music, said keyword information comprising keywords contained in the lyrics of said piece of music and keyword structure information indicating to which music structure segment a respective keyword belongs to;
spotting at least part of the keywords in the audio data based on keyword spotting of said audio data; and
determining or modifying said structure based on the spotted keywords and based on said keyword information.

9. Method according to any one of the preceding claims, further comprising the steps of:
receiving meta data for said piece of music, wherein said meta data indicates at least part of instruments used in said piece of music and/or vocal information which indicate if vocal parts are present in said piece of music or not;
determining time based instrumental/vocal information indicating which instruments are playing at which time and/or if vocals are present or not at a certain point of time of said piece of music, wherein said time based instrumental/vocal information is determined based on recognition and/or spotting of said instruments and/or said vocal information;
allocating said time based instrumental/vocal information to a respective graphical segment; and
displaying at least part of said time based instrumental/vocal information together with a respective graphical segment.

10. Method according to any one of the preceding claims, wherein said graphical object is a circle and at least one graphical segment corresponds to an annulus within said circle.

11. Method according to claim 10, wherein a first annulus corresponding to a segment at the beginning of said piece of music is arranged along the outer circumference of said circle and following annuli corresponding to segments following said segment at the beginning of said piece of music are arranged between said first annulus and the center of said circle in an order corresponding to the order of occurrence within said piece of music.

12. Method according to any one of claims 1 to 9, wherein said graphical object is a rectangular box and said graphical segments correspond to rectangular segments.

13. Method according to any of the preceding claims, wherein a feature vector is determined based on said structure, and said feature vector is used for finding further pieces of music having a similar structure as said piece of music.

14. Method according to any of claims 1 to 12, wherein a visualization is determined for a plurality of pieces of music based on said step of determining a structure, said step of allocating a predetermined graphical object, said step of segmenting and said step of displaying, and wherein respective graphical objects of pieces of music having a similar structure are displayed close to each other.

15. Method according to claim 14, wherein a similarity between two pieces of music is determined by a correlation value determined based on beginning and/or end times of music structure segments of the same type, said beginning and/or end times corresponding to music structure segments of said two pieces of music.

16. Method according to any of claims 1 to 12, wherein a visualization is determined for a plurality of pieces of music, and for each visualization a feature vector is determined from a respective visualization and each is arranged on a self organizing map such that closely correlating visualizations appear close to one another on the map, and wherein the visualizations are displayed when a user uses a cursor to hover over an area of said self organizing map.

17. Device for visualizing audio data corresponding to a piece of music, comprising:
a storage configured to store at least part of said audio data;
a music structure extractor configured to determine a structure of said piece of music based on said audio data, said structure comprising music structure segments each having a music structure segment length;
a data processing unit configured to allocate a predetermined graphical object to said piece of music, said graphical object having a predetermined size and to segment said graphical object into graphical segments, wherein each graphical segment has a size representing said music structure segment length; and
a display configured to display said graphical object and said graphical segments.

18. Device according to claim 17, further comprising
a speech recognition engine configured to receive lyrics information for said piece of music, said lyrics information comprising at least part of the lyrics of said piece of music and lyrics structure information indicating to which music structure segment a respective lyrics part of said at least part of the lyrics belongs to, said speech recognition engine further being configured to allocate at least a part of said at least part of the lyrics to a corresponding part of said audio data based on speech recognition of vocal parts of said audio data, wherein said data processing unit is further configured to determine or modify said structure based on the allocation and based on said lyrics information.

19. Device according to claim 17 or 18, further comprising
a key word spotter configured to receive keyword information for said piece of music, said keyword information comprising keywords contained in the lyrics of said piece of music and keyword structure information indicating to which music structure segment a respective keyword belongs to, and further configured to spot at least part of the keywords in the audio data based on keyword spotting of vocal parts of said audio data, wherein said data processing unit is further configured to determine or modify said structure based on the spotted keywords and based on said keyword information.

20. Device according to any one of claims 17 to 19, further comprising
a graphical user interface configured to enable selection of a displayed graphical segment; and
an audio interface configured to play an audio segment corresponding to the selected graphical segment.

21. System comprising
a user device configured to receive a visualization of a piece of music, said user device including a display configured to display said visualization; and
a server including
a storage configured to store at least said piece of music;
a music structure extractor configured to determine a structure of said piece of music, said structure comprising music structure segments each having a music structure segment length;
a data processing unit configured to generate said visualization, wherein a predetermined graphical object is allocated to said piece of music, said graphical object having a predetermined size and said graphical object is segmented into graphical segments, wherein each graphical segment has a size representing said music structure segment length; and
a data transfer mechanism configured to provide said visualization to said user device.

22. System according to claim 21, wherein said user device has a functionality to allow a user to select a graphical segment of said visualization, and upon selection of a certain graphical segment, said server transmits audio data to said user device, said audio data being a part of said piece of music and corresponding to said certain graphical segment.

23. Graphical user interface comprising
a predetermined graphical object representing a piece of music and comprising graphical segments each having a size representing a music structure segment length of a respective music structure segment of said piece of music, and
a selector configured to select at least one of said graphical segments.

24. Website comprising:
at least one visualization of a piece of music, said visualization comprising a predetermined graphical object segmented into graphical segments, wherein each graphical segment has a size representing a music structure segment length of a music structure segment of said piece of music;
a selection mechanism configured to allow selection by a user of a certain graphical segment and to transfer audio data to a user device, said audio data corresponding to a respective music structure segment represented by said certain graphical segment or to said piece of music.

25. Website according to claim 24, wherein the transfer corresponds to a download and/or streaming operation.

26. Website according to claim 24 or 25, wherein said user device is a mobile phone and said audio data is at least partly used as a ring tone of said mobile phone.

27. A computer program product, comprising a computer readable medium, a downloadable exectuable and/or a pre-installed program on computer, including computer program instructions that cause a computer to execute a method for visualizing audio data comprising:
determining a structure of said piece of music based on said audio data, said structure comprising music structure segments each having a music structure segment length;
allocating a predetermined graphical object to said piece of music, said graphical object having a predetermined size;
segmenting said graphical object into graphical segments, wherein each graphical segment has a size representing said music structure segment length; and
displaying said graphical object and said graphical segments on a display.
